Europäisches Patentamt

**European Patent Office**

Office européen des brevets

(11) Numéro de publication: **0 338 897**
**A1**

(12) **DEMANDE DE BREVET EUROPEEN**

(21) Numéro de dépôt: 89401026.3

(22) Date de dépôt: 14.04.89

(51) Int. Cl.⁴: **B 01 J 37/20**
C 10 G 47/26, C 10 G 49/12

(30) Priorité: 19.04.88 FR 8805271

(43) Date de publication de la demande:
25.10.89 Bulletin 89/43

(84) Etats contractants désignés: DE IT LU NL

(71) Demandeur: **INSTITUT FRANCAIS DU PETROLE**
**4, Avenue de Bois-Préau**
**F-92502 Rueil-Malmaison (FR)**

(72) Inventeur: **Born, Maurice**
**72, rue du Vieux Pont**
**F-92000 Nanterre (FR)**

**Parc, Guy**
**27, rue du Chateau**
**F-92500 Rueil Malmaison (FR)**

**Toulhoat, Hervé**
**6, Sente des Naquettes**
**F-95220 Herblay (FR)**

(54) **Procédé de présulfuration de catalyseur de traitement d'hydrocarbures.**

(57) L'invention concerne un procédé de traitement d'un catalyseur neuf ou régénéré renfermant un support à base d'au moins un oxyde d'un métal ou d'un métalloïde et au moins un métal actif, réalisé en l'absence d'hydrogène. Elle est caractérisée en ce que l'on traite ledit catalyseur à l'aide d'au moins un agent de sulfuration utilisé en solution dans un solvant, ledit agent consistant en un produit qui est obtenu au terme d'un procédé qui consiste à :
(a) à faire réagir au moins un composé choisi parmi les chlorures de soufre avec au moins une oléfine ou un mélange d'oléfines comportant 2 à 12 atomes de carbone par molécule, en vue de former un produit d'addition ; ou ("adduct"),
(b) à faire réagir ledit "adduct" avec au moins un mercaptate polysulfure alcalin dans un milieu aqueux et/ou alcoolique en vue de former une oléfine polysulfure pouvant contenir jusqu'à 65 % en masse de soufre.

EP 0 338 897 A1

## Description

## PROCEDE DE PRESULFURATION DE CATALYSEUR DE TRAITEMENT D'HYDROCARBURES.

La présente invention concerne un procédé de présulfuration de catalyseur de traitement d'hydrocarbures et/ou de préconditionnement d'un catalseur pour être ensuite présulfuré.

Il est souvent souhaitable de procéder à une sulfuration (généralement appelée "présulfuration") des métaux entrant dans la composition de certains catalyseurs de raffinage et/ou d'hydroconversion d'hydrocarbures soit lorsque ces catalyseurs sont neufs soit à l'issue de régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou d'hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible. De telles réactions de désulfuration, généralement effectuées en présence d'hydrogène, entre 200 et 400°C, sous une pression comprise entre par exemple 5 et 60 bars, avec une vitesse spatiale (exprimée en m$_3$ de charge injectée liquide par m$_3$ de catalyseur et par heure) comprise entre 0,5 et 15, avec une pression partielle d'hydrogène comprise entre 4 et 60 bars, la charge étant par exemple une essence distillant généralement entre 30 et 220°C et pouvant posséder un indice de brome compris entre 40 et 80 (g/100 g), contenant environ 15 à 45 %, en volume, d'oléfines (essentiellement des monooléfines et des quantités minimes de dioléfines) et 15 à 25 % d'hydrocarbures aromatiques.

Le catalyseur utilisé pour ce type de désulfuration ou d'hydrodésulfuration renferme un support généralement non acide par exemple une alumine ou des mélanges d'alumines (brevet USP 4 334 982) ou tout autre support adéquat à base d'au moins un oxide d'un métal ou de métalloïde (magnésie (USP 4 132 632, USP 4 140 626), silice, silice-alumines silice-magnésies, les silice-fluorées les alumines borées, les argiles, les charbons, les alumines fluorées) ce ou ces mélanges de support pouvant au moins en partie se présenter sous forme amorphe ou sous forme cristallisée (zéolites) et le catalyseur renfermant en outre 0,2 à 30 % d'au moins un métal actif des groupes VI, VIII ou autre choisi par exemple dans le groupe constitué par le cobalt, le molybdène, le nickel et le tungstène (US-A- 3 732 155 et 3 804 748). On utilise généralement un couple de deux de ces métaux, par exemple l'un des couples cobalt-molybdène, nickel-molybdène, cobalt-tungstène, tungstène-molybdène, cobalt-nickel, nickel-tungstène. On peut toujours à titre d'exemple utiliser un métal noble du groupe VIII de la famille du platine : Pt,Pd...US-A- 4 098 682.

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formule, (selon les métaux présents), Co$_9$S$_8$, MoS$_2$, WS$_2$ et Ni$_3$S$_2$.

Cette sulfuration (présulfuration) est effectuée, dans l'art antérieur, à une température voisine ou plus élevée (ainsi supérieure à 180°C et plus particulièrement au-dessus de 250°C) par rapport à la température réactionnelle choisie pour la réaction d'hydrodésulfuration, pendant quelques heures, au moyen d'un mélange d'hydrogène sulfuré généralement dilué dans de l'hydrogène (proportion d'hydrogène sulfuré dans l'hydrogène de l'ordre de 0,5 à 5 % en volume) avec une vitesse spatiale adéquate de l'ordre, par exemple, de environ 1.000 à 3.000 litres de gaz dans les conditions normales de température et pression par litre de catalyseur et par heure (US-A- 4 334 982). La sulfuration (ou présulfuration) proprement dite peut être effectuée par palier de température (brevet français n° 2 476 118). On peut utiliser divers agents de sulfuration, autres que l'hydrogène sulfuré (H$_2$S) et par exemple un composé sulfuré de la famille des mercaptans, le sulfure de carbone (CS$_2$), des sulfures ou des disulfures, les composés thiophéniques et, de préférence le diméthylsulfure (DMS) et le diméthyldisulfure (DMDS).

Une sulfuration ou présulfuration de catalyseur régénéré est également souhaitable dans les réactions d'hydroréformage d'hydrocarbures (reforming notamment d'un naphta) et de production d'hydrocarbures aromatiques ("Aromizing") par exemple la production de benzène, de toluène et de xylènes (ortho, méta ou para), soit à partir d'essences insaturées ou non (par exemple des essences de pyrolyse, de craquage, en particulier de steam cracking (craquage à la vapeur), ou de reformage catalytique, soit encore à partir d'hydrocarbures naphténiques capables par déshydrogénation de se transformer en hydrocarbures aromatiques.

Les conditions générales de ces réactions sont généralement les suivantes : température moyenne comprise entre 400 et 600°C, pression comprise entre 1 et 60 bars, vitesse horaire comprise entre 0,1 et 10 volumes de naphta liquide par volume de catalyseur et le taux de recyclage compris entre 0,5 et 20 moles d'hydrogène par mole de charge.

Le catalyseur peut renfermer, par example, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc...ou des mélanges de tels supports). La teneur totale en métaux nobles est comprise par exemple entre 0,1 et 5 % en poids par rapport au catalyseur. Le catalyseur également peut renfermer généralement au moins un halogène (chlore, fluor, etc...) avec une teneur pondérale de 0 à 15 %. Eventuellement encore, le catalyseur renferme au moins un métal promoteur choisi dans les groupes les plus divers de la classification périodique des éléments, la teneur pondérale en métal promoteur variant par exemple entre 0,1 et 15 %. On peut citer ainsi les métaux des groupes VIII, VI A et VI B, et II B, III A, IV A, V A et V B, IV B, III B, I A et I B ainsi que les métaux de la famille des lanthanides : on citera plus particulièrement, outre les métaux du groupe VIII nobles ou non nobles, le cuivre, l'argent, l'or, le germanium, l'étain, l'indium, le thallium, le manganèse, le rhénium, le tungstène, le molybdène, le niobium et le titane.

Pour ces réactions de refromage catalytique ou de production d'hydrocarbures aromatiques, la sulfuration du catalyseur neuf ou régénéré est accompagnée d'une réduction à l'hydrogène de catalyseur et s'effectue en tête du réacteur ou au voisinage de la tête du réacteur. La température dans la zone de sul furation est imposée par la température à laquelle s'effectue la réduction, soit généralement entre 480 et 600°C dans la plupart des cas. La difficulté de ce type de sulfuration sur le site, c'est-à-dire au voisinage des réacteurs a entraîné des mises en oeuvre de sulfuration souvent fastidieuses quoiqu'efficaces (US-A-4 172 027).

L'agent de sulfuration utilisé est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyles ou des alkylmercaptans, dilués par de l'hydrogène. La pression utilisée est celle qui règne dans le réacteur de reforming ou de production d'hydrocarbures aromatiques, la durée de la réaction variant de quelques minutes à quelques jours selon les conditions opératoires choisies. (voir US-A- 4 172 027).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions de conversions d'hydrocarbures telles que les réactions d'hydrogènation, de déshydrogénation, d'alkylation, d'hydroalkylation, de déalkylation, d'hydrodéalkylation, de déalkylation à la vapeur d'eau, d'isomérisation et d'hydrodémétallisation (ou démétallation) des charges lourdes.

La sulfuration ou présulfuration, lorsqu'elle est nécessaire peut s'opérer avantageusement selon l'une ou l'autre des techniques de l'art antérieur rappelées ci-dessus.

Les métaux des catalyseurs utilisés en raffinage, hydroraffinage ou en pétrochimie, qu'ils soient neufs ou régénérés, sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en oeuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'à permis le procédé efficace du brevet Européen EP-B- 130 850 dans lequel un composé, sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur ; le procédé d'incorporation dudit composé sulfuré peut être effectué en hors site également sur un catalyseur neuf ou régénéré, avant sa mise en oeuvre dans l'unité industrielle.

D'une façon plus précise, dans le brevet Européen EP-B- 130 850, le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement "hors site" ou "ex-situ, qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus ou moins en communication directe avec ces réacteurs, nécessitant d'opérer dans des conditions opératoires, (de température, pression ou autres), imposées au moins en partie par les conditions opératoires des réacteurs eux mêmes ou des annexes de ces réacteurs (zone d'hydrogénation préalable du catalyseur par exemple).

Le procédé permet, lorsque le catalyseur sera soumis dès son démarrage de préférence sur le site ("in situ") à une réaction d'activation en présence d'hydrogène, (généralement au-dessus de 100°C), de procéder, ensuite grâce à la présence d'hydrogène sur le site, à la sulfuration au taux requis, stoechiométrique ou non stoechiométrique, du ou des métaux actifs entrant dans la composition du catalyseur.

Dans le brevet Européen EP-B- 130 850, on a utilisé pour incorporer du soufre dans la porosité du catalyseur neuf ou régénéré au moins un agent de sulfuration de formule générale : $R_1 - S_{(n)} - R_2$, c'est-à-dire un polysulfure organique.

Dans ce polysulfure de formule : $R_1 - S_{(n)} - R_2$

n est un nombre entier de 3 à 20, et $R_1$ et $R_2$, identiques ou différents, représentent des radicaux organiques renfermant chacun 1 à 150 atomes de carbone par molécule, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéro-atome. $R_1$ éventuellement peut également être un atome d'hydrogène.

On peut citer, à titre d'exemple préféré de polysulfure, le ditertio-dodécylpolysulfure (n = 5) où $R_1$ et $R_2$

3

sont chacun un radical dodécyle.

On peut citer également de ditertiononylpolysulfure (n = 5) où $R_1$ et $R_2$ sont chacun un radical nonyle.

Dans la présente invention, on incorpore dans la porosité du catalyseur neuf ou régénéré, en l'absence d'hydrogène, au moins un agent de sulfuration de formule défini par sa méthode de préparation et dont la formule préférée sera indiquée ci-dessous :

Ainsi la présente invention concerne un procédé de traitement d'un catalyseur neuf ou régénéré renfermant un support à base d'au moins un oxyde d'un métal ou d'un métalloïde et au moins un métal actif, réalisé en l'absence d'hydrogène et caractérisé en ce que l'on traite ledit catalyseur à l'aide d'au moins un agent de sulfuration spécifique utilisé en solution dans un solvant.

L'invention concerne plus précisément un procédé de traitement d'un catalyseur neuf on régénéré, renfermant un support à base d'au moins un oxyde d'un métal ou d'un métalloïde et au moins un métal actif, en vue d'effectuer ultérieurement, en présence d'hydrogène, la sulfuration totale ou partielle, c'est-à-dire, en quantités stoechiométriques ou non, du ou des métaux dits actifs entrant dans la composition du catalyseur ; le procédé est caractérisé en ce que le catalyseur, neuf ou régénéré, est traité "ex-situ" à l'aide d'au moins le dit agent de sulfuration que l'on introduit entre 0 et 50°C en quantités requises dans le porosité du catalyseur.

Selon l'invention, l'agent de sulfuration est donc un polysulfure qui mélange complexes d'oléfines polysulfurées essentiellement définies par les procédés permettant de les obtenir (demande de brevet Européen EP-A- 402 252 et demande de brevet français n° 87 16 847.

Les principales étapes des procédés de synthèse de ces polysulfures comportent :
- Une étape (1) dans laquelle on fait réagir au moins un composé choisi parmi les chlorures de soufre, par exemple parmi le monochlorure et le dichlorure de soufre avec au moins une monooléfine aliphatique de 2 à 12 atomes de carbone, de manière à former un produit d'addition ou "adduct".
- Une étape (2) dans laquelle on fait réagir, dans un milieu alcoolique ou hydro alcoolique, au moins un produit d'addition obtenu par une étape telle que (1) avec au moins un mercaptate R'SM et/ou un mercaptate-polysulfure répondant à la formule générale $R'$ $S_xM$, formules dans lesquelles $R'$ représente un radical aliphatique, renfermant par exemple de 1 à 14 atomes de carbone, ce radical aliphatique pouvant comporter au moins un groupement fonctionnel (par exemple au moins un groupe hydroxyle), un radical aromatique, éventuellement substitué par un ou plusieurs radicaux aliphatiques et renfermant par exemple de 6 à 14 atomes de carbone; ou un radical hétérocyclique renfermant au moins un hétéroatome choisi parmi l'azote, le soufre et l'oxygène ; M représente un atome ou un groupement monovalent correspondant à une base minérale de formule générale MOH ; et x prend une valeur moyenne d'au moins 1 et pouvant aller par exemple jusqu'à environ 7. Le but est de former une oléfine polysulfure pouvant contenir jusqu'à 65 % en masse de soufre.

Selon une méthode préférée, l'agent de sulfuration est obtenu par un procédé en 5 points dans lequel : (1) on fait réagir au moins un composé choisi parmi le monochlorure et le dichlorure de soufre avec au moins une monooléfine aliphatique de 2 à 12 atome de carbone pour former un produit d'addition ou "adduct" : (2) en vue d'obtenir un mercaptate et/ou un mercaptate-polysulfure, on fait réagir un mercaptan avec de l'hydroxyde de sodium, de potassium ou d'ammonium avec éventuellement du soufre, en solution dans un mono-alcool aliphatique substantiellement anhydre comportant de 1 à 4 atomes de carbone par molécule ; (3) On met ledit "adduct" formé dans l'étape (1), ou au point (1), avec la solution alcoolique obtenue à l'issue du point (2) ; (4) On chauffe le mélange résultant du point (3), on élimine ledit monoalcool tout en ajoutant de l'eau en quantité suffisante pour maintenir en solution les réactifs et les produits minéraux ; (5) après décantation et élimination de la phase aqueuse, on récupère la phase organique constituée au moins en majeure partie par la composition d'oléfine polysulfurée recherchée.

De préférence, au point (1), on utilise de 1,5 à 2,5 mole de monooléfine aliphatique par mole de mono et/ou de dichlorure de soufre et on opère à une température de 20 à 80°C;

Au point (2), on peut utiliser de 100 à 400 $cm^3$ de monoalcool aliphatique et de 0,1 à 1 mole de mercaptan par mole d'hydroxyde. Plus particulièrement, on peut utiliser de 125 à 200 $cm^3$ de monoalcool aliphatique par mole d'hydroxyde.

De façon avantageuse le monoalcool aliphatique est le méthanol et l'hydroxyde est la soude, et au point (2), on peut (lorsqu'on désire un mercaptate-polysulfure) ajouter du soufre élémentaire au mélange de réaction. Dans ce cas la proportion de soufre élémentaire introduite va jusqu'à environ 3,6 atomes-gramme par mole d'hydroxyde introduite et de préférence va jusqu'à environ 2,5 atomes-gramme par mole d'hydroxyde.

Les conditions opératoires d'obtention de la composition (agent de sulfuration) peuvent avantageusement être les suivantes : la réaction au point (3) est effectuée sous une pression relative allant jusqu'à environ 1 MPa. Dans le point (4), la température va de 50°C à la température de reflux du milieu.

On pourra effectuer un sixième point dans lequel la composition d'oléfine polysulfurée obenue est mise en contact avec un composé basique puis lavée à l'eau ; le procédé pour la préparation de la composition peut être effectué en continu selon un processus à courants parallèles et à contacts multiples et éventuellement sous pression.

Cette composition qui présente une teneur en soufre allant jusqu'à 65 % en masse, peut avoir une teneur en chlore inférieure à environ 0,1 % en masse, voire inférieure à environ 0,05 % en masse.

La monooléfine aliphatique e 2 à 12 atomes de carbone mise en jeu dans l'étape (1) peut être par exemple un butène, un hexène, du dipropylène, un heptène, un octène, du diisobutylène, un nonène, du tripropylène, un décène, un undécène, un dodécène, du tétrapropylène ou du tri-isobutylène. On peut mettre en jeu deux ou plusieurs monooléfines telles que celles mentionnées ci-dessus. On peut citer par exemple les coupes oléfiniques obtenues par dimérisation du propylène (procédé"DIMERSOL") et contenant une proportion prépondérante d'hexènes.

La monooléfine (ou le mélange de monooléfines) est utilisée plus particulièrement à raison de 1,5 à 2,5 moles par mole de mono- et/ou de dichlorure de soufre. Le mono et/ou de dichlorure de soufre liquide est généralement introduit dans l'oléfine ou le mélange d'oléfines à 20-80°C, plus spécifiquement à 30-50°C.

Le produit d'addition, ou "adduct", obtenu à l'issue de l'étape (1) du procédé général ou du point (1) du procédé préféré consiste en un mélange de composés sulfurés dans lequel la proportion moyenne de soufre peut être d'environ 1 à 2 atomes-gramme par mole, selon que l'on utilise au départ du dichlorure de soufre, du monochlorure de soufre ou un mélange des deux. La proportion de chlore est d'environ 1 à 2 atomes-gramme par mole de produit. Il doit être entendu que dans le cas où l'on utilise un mélange d'oléfines, le nombre de mole du produit d'addition auquel on se réfère est un nombre de mole global, tenant compte de la masse molaire moyenne du mélange d'oléfines de départ.

Dans l'étape (2), du procédé général ou le point (3) du procédé préféré, où l'on fait réagir le mercaptate et/ou le mercaptate-polysulfure de formule $R'S_xM$, de préférence au sein d'un mono alcool aliphatique, avec de l'"adduct" obtenu à l'issue de l'étape (1), ledit "adduct" est en général ajouté à la solution alcoolique dudit mercaptate ou mercaptate-polysulfure en une proportion telle que ledit mercaptate ou mercaptate-polysulfure représente un excès molaire d'environ 0,1 à 70 % par rapport à la stochiométrie de 1 mole par atome-gramme de chlore contenu par ledit "adduct", le milieu réactionnel étant maintenu par exemple à une température allant de -10°C à la température de reflux du solvant alcoolique mis en jeu. On peut également envisager d'ajouter la solution alcoolique de mercaptate et/ou de mercaptate-polysulfure au produit d'addition tel qu'obtenu à l'issue de l'étape (1), les propriétés du produit final (la composition d'oléfine polysulfurée) étant inchangées.

Au point (2), il est également possible de mettre en jeu un mélange de deux ou plusieurs "adducts", préparés chacun selon la méthode de l'étape (1), à partir d'une monooléfine unique ou d'un mélange de monooléfines, comme il a été dit précédemment.

Les mercaptates et les mercaptates-polysulfures de formule générale $R'-S_xM$ mis en jeu dans l'étape (2) et dont on décrit une préparation au point (2) du procédé préféré peuvent être préparés plus particulièrement par réaction, de préférence en milieu alcoolique, d'au moins un mercaptan de formule générale $R'SH$ avec une base minérale MOH, $R'$ et M étant définis comme précédemment, puis éventuellement avec du soufre élémentaire (dans le cas de la préparation d'un mercaptate-polysulfure, pour lequel x a une valeur moyenne supérieure à 1 et pouvant aller par exemple jusqu'à environ 7.

Comme exemples de mercaptans de formule $R'SH$ utilisables avantageusement pour préparer les mercaptates et mercaptate-polysulfures, on peut citer le méthylmercaptan, l'éthylmercaptan, le n-propylmercaptan, le n-butylmercaptan, l'isobutyl-mercaptan, le tert-butylmercaptan, le tert-nonylmercaptan, le tert-dodécylmercaptan, le mercaptoéthanol, le mercapto-3 propanediol-1,2, le phényl-mer captan, les tolymercaptans, ainsi que le mercapto-2 benzimidazole, le mercapto-2 benzothiazole, le mercapto-2 benzoxazole, le mercapto-2 méthyl-1 imidazole, les mercapto-2 (et 4) pyridines, le mercapto-2 pyridinol-3, le mercapto-2 thiazoline et le mercapto-5 triazole.

La réaction entre le mercaptan et la base minérale (au point (2) du procédé préféré) est en général effectuée à une température de 20 à 100°C. Le milieu alcoolique peut comprendre au moins un monoalcool aliphatique renfermant par exemple de 1 à 5 atomes de carbone. On utilise le plus souvent le méthanol. Selon que la base minérale utilisée est la soude, la potasse ou l'hydroxyde d'ammonium, le produit obtenu est un mercaptate de sodium, de potassium ou d'ammonium de formule $R'-SM$ (M représentant Na, K ou $NH_4$).

Pour préparer un mercaptate-polysulfure, le mercaptate ainsi formé peut-être mis à réagir avec du soufre élémentaire. Dans ce cas, le soufre élémentaire mis en jeu peut être avec le mercaptate dans une proportion allant jusqu'à 10 atomes-gramme par mole. Cette réaction peut être réalisée à une température de 20-100°C.

A l'issue du point (2) du procédé préféré, (ou à l'issue de l'étape (2) du procédé général, on obtient une composition d'oléfine(s) polysulfurée(s) qui peut être ensuite traitée, dans une étape (3) par une solution aqueuse alcaline, plus particulièrement une solution aqueuse de soude ou de potasse ayant par exemple une concentration d'environ 1 à 50 % en masse. La quantité de solution alcaline utilisée peut être par exemple de 0,1 à 5 fois la quantité massique d'oléfine polysulfurée brute à traiter.

Selon un procédé préfini de l'invention, on peut effectuer la sulfuration du catalyseur en deux étapes A et B.

A/ Dans une première étape réalisée "ex-situ" en l'absence d'hydrogène, générale ment entre 0-150°C, (voire entre 0 et 50°C), on traite le catalyseur à l'aide d'au moins un agent de sulfuration de façon à incorporer partiellement ou totalement cet agent dans la porosité du catalyseur ; le traitement se fait de préférence en présence d'un balayage de gaz inerte.

B/ Dans une deuxième étape réalisée de préférence "in situ" et au-dessus de 100°C, et de préférence au-dessus de 140°C, on procède à une étape d'activation du catalyseur effectuée généralement en présence d'hydrogène, (éventuellement également en présence de 0,1 à 10 % en volume de vapeur et/ou, par exemple entre 0,1 et 1 %), sur le ou les métaux entrant dans la composition dudit catalyseur. Cette deuxième étape est généralement effectuée par le raffineur. Quelques détails sont indiqués ci-dessous.

Selon l'invention, l'agent de sulfuration est donc un polysulfure de formule générale : $R'-S_y-R-S_x-R-S_y-R'$.

Ces polysulfures sont des mélanges complexes d'oléfines polysulfurées essentiellement définies par les procédés permettant de les obtenir (demande de brevet européen EP-A-402.252 et demande de brevet français n° 87/16.847.

Dans la formule générale, R représente en radical hydrocarboné de $C_2$ à $C_{12}$, linéaire ou ramifié, dépendant de l'oléfine ou du mélange d'oléfines utilisé dans la synthèse.

R' représente un radical alkyle, alkényle, arylalkyle, ou arylakényle comportant 1 à 12 atomes de carbone,
x représente un nombre d'atome de soufre consécutifs dépendant de l'halogénure ou du mélange d'halogénure de soufre mis en oeuvre, x prenant la valeur de 1 jusqu'à 4, de préférence 1 et 2,
y représente un nombre d'atome de soufre consécutifs dépendant de la quantité de soufre élémentaire utilisée lors de la synthèse y étant choisi de 1 jusqu'à 8, et de préférence de 1 à 7.

Les inconvénients d'une méthode classique de sulfuration "in situ" peuvent se résumer ainsi:
- température de travail trop élevée ;
- utilisation de produit ($H_2S$, $CS_2$, DMS ou DMDS) malodorants et toxiques;
- risque de passivation du métal par réduction des oxydes avant leur sulfuration;
- impossibilité d'utiliser des charges contenant des oléfines pour éviter tout risque de polymérisation :
- difficulté d'utiliser des charges lourdes du type distillat sous vide ou résidus en raison de leur très faible pouvoir mouillant dû à leur grande viscosité;
- durée de la sulfuration (de plusieurs heures à plusieurs jours).

Les avantages du traitement préliminaire d'incorporation selon l'invention d'un composé sulfuré, ex-situ sont par contre les suivants:
- température de travail basse;
- au choix sulfuration complète et homogène du catalyseur ou sulfuration au taux exact demandé de sulfuration;
- pas de risque de provoquer une réduction des métaux oxydés car, selon l'invention, le traitement est effectué en l'absence d'hydrogène;
- manipulation aisée des catalyseurs rendus non pyrophoriques par addition d'eau et/ou d'essence légère;
- pratiquement aucune mauvaise odeur et aucune toxicité;
- possibilité d'utiliser le catalyseur pour toutes méthodes de chargement dense;
- économie de temps pour le raffineur et pour l'utilisateur des catalyseurs;
- activité maximum obtenue dès l'alimentation du réacteur par la charge à désulfurer.

Les recherches effectuées dans le cadre de l'invention, ont conduit à développer une méthode de sulfuration "ex-situ" de catalyseurs neufs ou régénérés, méthode qui a l'avantage de limiter de façon importante les infrastructures industrielles que réclamaient les techniques de présulfuration de l'art antérieur.

L'objet de cette invention est donc de conduire "ex-situ" la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être présulfurés.

Le raffineur, ou tout autre utilisateur, n'aura plus donc qu'à réactiver ce catalyseur en présence d'hydrogène à une température par exemple de 100 à 200°C pour un catalyseur de désulfuration, de 400 à 600°C environ, pour un catalyseur de reformage catalytique ou de production d'hydrocarbures aromatiques afin de faire réagir le soufre sur les métaux contenus et démarrer aussitôt la réaction de raffinage ou de conversion d'hydrocarbures par injection de la charge à traiter.

Le procédé de sulfuration ou présulfuration de catalyseur selon l'invention est donc caractérisé par un prétraitement du catalyseur à l'aide d'un agent de sulfuration tel qu'il a été défini ci-dessus.

Le procédé selon l'invention d'incorporation de soufre dans le catalyseur est effectué en l'absence d'hydrogène et permet d'obtenir avec une très grande précision de degré de sulfuration total ou partiel demandé par l'utilisateur. Cette incorporation de soufre est effectuée entre 0 et 50°C et de préférence entre 10 et 35°C et de préférence encore à la température ambiante.

La sulfuration selon l'invention permet ainsi de fixer sur le catalyseur, avec une grande précision, par dilution avec un solvant choisi, la quantité adéquate de soufre, quantité stoechiométrique par exemple pour des catalyseurs d'hydrodésulfuration et quantités non stoechiométriques mais critiques pour les catalyseurs de reforming ou de production d'hydrocarbures aromatiques, ces quantités critiques dépendant de la nature du métal ou de chacun des métaux entrant dans la composition du catalyseur. (On sait que le soufre est un poison des catalyseurs de reforming et qu'il y a donc lieu de maitriser parfaitement l'incorporation exacte souhaitée de soufre, ce que permet précisément le procédé de l'invention). Le présent procédé permet donc d'effectuer le taux de sulfuration conforme aux voeux de l'utilisateur du catalyseur. L'agent de sulfuration est utilisé, dilué dans un solvant adéquat qui dépend notamment de la nature de l'agent de sulfuration c'est-à-dire des valeurs de x, y et n, et de la nature des radicaux R et R' ces caractéristiques déterminant la teneur en soufre incorporé dans le catalyseur généralement par capillarité ou par porosité. Les processus de sulfuration varient en fait selon les coupes à traiter ultérieurement en présence des catalyseurs traités conformément à l'invention. Le solvant choisi peut être ainsi un des solvants suivants utilisés seuls ou en mélange ensemble:
- une essence légère bouillant par exemple entre environ 60 et 95°C;
- une essence de type hexane bouillante entre 63 et 68°C environ;
- une essence de type F bouillant entre environ 100 et 160°C et contenant généralement 10 à 20 % d'hydrocarbures aromatiques, par exemple 15 %, (en volume);
- une essence de type "white spirit" bouillant entre environ 150 et 250°C et renfermant généralement 14 à 22 % d'hydrocarbures aromatiques, par exemple 17 %, en volume;
- ou toute coupe hydrocarbonée ou non, équivalente aux essences précédentes.

Ainsi conformément à l'invention, on utilise à titre d'agent de sulfuration un composé sulfuré particulier qui va être bloqué dès son introduction dans la masse catalytique. Ultérieurement, in-situ, c'est-à-dire sur le site ou à proximité du site (sur lequel le catalyseur sera utilisé pour le traitement de diverses charges), lors de la réaction classique d'activation, effectuée en présence d'hydrogène, l'agent de sulfuration introduit dans le catalyseur en quantités prédéterminées, sera capable de donner naissance à de l'hydrogène sulfuré lequel, en présence d'hydrogène, conduira au sulfure ou aux sulfures désirés du ou des métaux présents dans le catalyseur selon par exemple les réactions exothermiques (1) (2) et (3) suivantes pour ce qui concerne, à titre d'exemples, les sulfurations du molybdène, du cobalt et du nickel :

$$MoO_3 + 2 H_2S + H_2 \rightarrow MoS_2 + 3 H_2O + Q \quad (1)$$
$$9 CoO + 8 H_2S + H_2 \rightarrow Co_9S_8 + 9 H_2O + Q \quad (2)$$
$$3 NiO + 2 H_2S + H_2 \rightarrow Ni_3S_2 + 3 H_2O + Q \quad (3)$$

L'emploi d'un solvant adéquat, dans lequel est dissous l'agent de sulfuration, permet de jouer sur la chaleur latente de vaporisation du solvant choisi, donc d'absorber une partie au moins de l'exothermicité de la réaction de sulfuration.

Un autre avantage du procédé "ex-situ" selon l'invention, est qu'il n'est pas besoin d'utiliser tout de suite de l'hydrogène, d'où l'inutilité ici de manipulation de ce gaz. De l'hydrogène, bien sûr, est nécessaire ensuite pour procéder à l'activation du catalyseur mais cette activation est réalisée sur le site lui- même puisque de toute façon, sur le site, l'emploi d'hydrogène est généralement nécessaire pour le traitement des coupes à traiter en présence du catalyseur présulfuré selon l'invention.

Les tests suivants, donnés à titre d'illustrations non limitatives, font mieux comprendre l'intérêt de l'invention.

On ajoutera que d'une façon générale, la présulfuration des catalyseurs peut être effectuée sur un produit neuf ou régénéré, que cette présulfuration se fait donc par adsorption d'une quantité stoechiométrique, par rapport aux métaux, de polysulfures à haute teneur en soufre, que l'adsorption de ce polysulfure sera facilitée par dilution dans un solvant notamment dans du white spirit. Le volume de polysulfure et du solvant choisi devant de préférence représenter environ une valeur égale au volume poreux du lit de catalyseur à traiter: Ainsi, à titre d'exemple, pour 100 g de catalyseur régénéré ou neuf (forme oxydée) il s'agit donc de mettre environ 9 grammes de soufre en polysulfure dans environ 45 cm$^3$ de mélange total polysulfure plus solvant (white spirit par exemple). L'adsorption de ce polysulfure se fait généralement à l'air ambiant. Le solvant est ensuite éliminé de préférence sous atmosphère inerte ou non oxydante, par exemple par entraînement à la vapeur d'eau. L'opération de séchage se fait avantageusement à une température comprise entre 50 et 200° C CELSIUS.

L'opération d'activation est alors exécutée par le raffineur dans le réacteur où est placé la charge catalytique ainsi présulfurée.

Le lit peut être purgé à l'azote chaud pour éliminer toute présence d'oxygène gazeux pendant le stockage ou le transport du catalyseur. Dans le réacteur de la raffinerie, juste avant d'envoyer le charge à traiter pour démarrer l'activation, on peut faire alors passer un courant d'hydrogène par exemple à 150° C, avec un débit horaire correspondant par exemple à 40 fois au moins le volume du lit catalytique.

La température va légèrement croître du fait de l'exothermie; le mélange gazeux qui se crée (le mélange H$_2$ + H$_2$S produit) peut éventuellement être recyclé et peut-être utilisé pour limiter la montée en température. La température doit être de préférence supérieure à 100° C pour éviter toute condensation d'un liquide et inférieure à 200° C pour éviter tout risque de surchauffe.

Le suivi de la sulfuration se fait par le contrôle des températures, l'évolution de la teneur en H$_2$S, la quantité d'eau recueillie dans le gaz de purge après condensation (au ballon séparateur).

On rappelle ci-dessous les principaux avantages du procédé :
- travail de sulfuration s'effectuant à plus basse température ;
- manipulation aisée des catalyseurs du fait que l'on n'a pas affaire à des sulfures très malodorants ; les oléfines polysulfurées ayant une odeur modérée et ne présentant aucun caractère toxique ;
- sulfuration plus homogène du lit catalytique ;
- possibilité d'utiliser les infrastructures des usines de régénération ex-situ des catalyseurs ;
- infrastructure industrielle réduite ;
- plus de stockage de produit sulfuré difficilement utilisable comme le DMDS ;
- temps d'immobilisation des réacteurs réduit ;
- pas de risque de réduction des métaux qui entraîne les réactions d'hydrocracking et non les réactions d'hydrodésulfuration désirées et généralement recherchées sélectivement ;
- dans le cas d'hydroraffinage de coupes lourdes en vue de leur hydrocraking ou de leur démétallisation, le raffineur est souvent obligé de présulfurer le cataly seur en utilisant une charge légère qui doit être ensuite stockée. Dans le cadre de cette invention, on n'aura plus besoin de procéder de manière aussi compliquée, puisque le catalyseur sera déjà sulfuré au moment d'envoyer la charge à traiter.

On a également découvert, dans le cadre de la présente invention, un moyen pour accélérer ultérieurement lors de la réactivation du catalyseur par l'hydrogène, la transformation des oxydes des métaux actifs en sulfure de métaux.

Ce moyen consiste à opérer l'incorporation "ex-situ" du poly-sulfure dans la porosité du catalyseur, en présence d'au moins un additif possèdant des propriétés de réducteur et qui est choisi dans le groupe constitué par les aldéhydes renfermant 4 à 14 atomes de carbone par molécule (et de préférence 5 à 12 atomes de carbone), les cétones ou polycétones renfermant 3 à 18 (et de préférence 5 à 12) atomes de carbone par molécule, les éthers renfermant 5 à 14 (de préférence 6 à 12) atomes de carbone par molécule, les alcools ou polyalcools renfermant 5 à 14 (et de préférence 6 à 12) atomes de carbone par molécule et les acides organiques ou polyacides renfermant 3 à 14 (et préférence 6 à 12 atomes de carbone par molécule).

On utilisera, en poids, avantageusement 0,4 à 8 % de préférence 0,8 à 4 % et plus particulièrement 0,9 à 3 % de l'additif ou des additifs choisis par rapport au poids du polysulfure ou des polysulfures utilisés.

Le ou les additifs peuvent être ajoutés, par exemple, avec la solution du ou des polysulfures utilisés, soit à l'état pur, soit dissous dans un solvant adéquat. Ce solvant peut être du même type que les solvants choisis pour dissoudre le polysulfure, à savoir, par exemple :
- une essence légère bouillant par exemple entre environ 60 et 95°C ;
- une essence de type hexane bouillant entre 63 et 68°C environ ;
- une essence de type F bouillant entre environ 100 et 160°C et contenant généralement 10 à 20 % d'hydrocarbures aromatiques, par exemple 15 % (en volume) ;
- une essence de type "white spirit" bouillant entre environ 150 et 250°C et renfermant généralement 14 à 22 % d'hydrocarbures aromatiques, par exemple 17 %, en volume ;
- toute coupe hydrocarbonée ou non, équivalente aux essences précédentes.

L'additif ou les additifs selon l'invention, peuvent être utilisés dans un autre solvant tel que, par exemple, les alcools (méthanol, éthanol, propanol, etc...) ou d'autres liquides minéraux ou organiques connus pour dissoudre les aldéhydes, les cétones, les éthers, les alcools, polyalcools, acides et polyacides utilisables selon la présente invention.

On trouvera des exemples de ces additifs dans le brevet Européen EP-B- 130 850.

Dans les exemples 1 à 4 qui vont suivre, on va étudier, pour un hydroraffinage ou un hydrotraitement d'une coupe hydrocarbonée l'incidence de la méthode de sulfuration du catalyseur adoptée.

La coupe que l'on se propose d'hydroraffiner est une charge modèle renfermant en poids :

|  |  |  |
|---|---|---|
| 20% | de | toluène |
| 2% | de | thiophène |
| 78% | de | cyclohexane |

Les conditions opératoires sont les suivantes :

|  |  |  |
|---|---|---|
| Température | : | 360°C |
| Pression totale | : | 60 bars |
| V.V.H. | : | 2 |
| H₂/HC | : | 350 l/h |
| Durée du traitement | : | 48 heures |
| Volume du catalyseur mis en jeu | : | 40 cc dans les 4 exemple 1 à 4 |

en vue de déterminer la voie donnant les meilleurs performances.L'analyse des effluents est effectuée par chromatographie en phase gazeuse. On mesurera dans chaque test l'activité en hydrogénation ("A") du toluène et l'activité en isomérisation ("I") du cyclohexane en méthylcyclopentane ;

$$A = Log\frac{1}{1-X}$$

(logarithme népérien) où X est le taux de conversion du toluène, c'est-à-dire :

$$X = \frac{\sum P}{\sum T}$$

$\sum P$ représentant la somme des titres molaires des produits de conversion du toluène (méthylcyclohexane, éthylcyclopentane et les diméthylcyclopentanes) et $\sum T$ représentant la somme $\sum P$ + titre de toluène résiduel. X est compris entre 0 et 1, X étant égal à 1 pour une conversion à 100 % de toluène.

8

$$I = 100 \quad x \quad \frac{\text{Titre molaire du méthylcylcopentane}}{\text{Titre molaire en méthylcyclopentane} \; + \; \text{Titre molaire en cyclohexane résiduel}}$$

(l'activité en isomérisation I permet de mesurer l'acidité du catalyseur). Le catalyseur utilisé est un catalyseur commercial de la société Procatalyse renfermant en poids 4 % d'oxyde de Nickel NiO et 16 % d'oxyde de molybdène $MoO_3$, ces composés de métaux actifs étant déposés sur une alumine gamma.

EXEMPLE 1 : (comparatif).

Avant le démarrage de l'hydroraffinage, on procède à la présulfuration du catalyseur selon une méthode conventionnelle, en opérant de la façon suivante :
On charge dans le réacteur, le catalyseur dont les métaux actifs sont sous la forme de leurs oxydes NiO et $MoO_3$.
On purge l'unité sous hydrogène, à froid, et sous une pression de 1 bar (on a vérifié que les résultats seraient les mêmes si cette étape était effectuée sous une forte pression, 60 bars par exemple).
On chauffe le catalyseur à 150°C sous hydrogène, sous 1 bar (ou 60 bars).
On injecte à l'entrée du réacteur, dont la température est 150°C (sous 60 bars de pression) une charge de sulfuration contenant en poids :

|  |  |  |
|------|-----|------------------|
| 20% | de | toluène |
| 2% | de | diméthyldisulfure |
| 78% | de | cyclohexane |

Le diméthyldisulfure provoque la sulfuration des oxydes de nickel et de molybdène. Les conditions opératoires de sulfuration sont les suivantes :
VVH : 2
$H_2$/HC : 350 l/h

On augmente la température à 280°C et l'on poursuit la sulfuration 2 heures, puis on porte la température à 320°C pendant deux heures et enfin on porte la température à 350°C pendant encore deux heures. La sulfuration du catalyseur étant effectuée, on substitue alors à la charge de sulfuration. la charge à hydroraffiner et l'on procède à l'hydroraffinage de cette charge dans les conditions opératoires données plus haut.

Résultats :
A = 1,2
I = 0,6

EXEMPLE 2 : (comparatif), effectué selon la technique d'EP-B- 130 850.

Dans cet exemple, on procède à une sulfuration du catalyseur en opérant selon la méthode du brevet Européen EP-B- 130 850, en deux étapes :

Première étape :

On utilise pour la présulfuration du catalyseur, le TPS 37, fabriqué par ELF Aquitaine et renfermant environ 37 % en poids de soufre, (la formule a été donnée dans la partie générale de cette demande de brevet) ; pour que l'ensemble du polysulfure soit adsorbé, il faut utiliser un volume de réactif (polysulfure + solvant du polysulfure) égal au volume d'imprégnation de la charge de catalyseur traité. C'est la connaissance de ce volume poreux total, ou volume d'imprégnation, qui détermine la quantité de solvant à utiliser. Dans le cadre du présent essai, ce volume, pour 100 g de catalyseur, est de 45 ml en moyenne (dont 60 % de solvant et 40 % de polysulfure). Le solvant utilisé est un white spirit (température d'ébullition entre 150 et 250°C). On a opéré à 24°C.

On utilise la stoechiométrie en soufre nécessaire pour sulfurer ultérieurement la totalité des oxydes (NiO, $MoO_3$) soit 8,5 % S. On procède ainsi à l'imprégnation à sec du catalyseur, suivie d'une évaporation sous 10 mm de mercure ou sous courant de gaz inerte.

Deuxième étape :

Le catalyseur dont les métaux sont sous forme d'oxydes et renfermant du soufre dans sa porosité, est introduit dans le réacteur. Le réacteur est purgé de son air et on le met en atmosphère d'hydrogène à froid, sous 1 bar (les résultats ultérieurs ne sont pas modifiés si la pression adoptée avait été plus forte, 60 bars par exemple). On chauffe le catalyseur imprégné de polysulfure, sous hydrogène à 150°C, en présence de vapeur d'eau surchauffée (1 % en volume) et on maintient la température 2 heures à 150°C. Le catalyseur devient noir, ceci étant dû à la formation des sulfures métalliques. L'analyse du catalyseur sulfuré au TPS 37 donne comme valeur en soufre 8,0 % S, (poids ainsi qu'une valeur en carbone de 3 % (poids).

Test d'hydroraffinage :
On porte la pression dans le réacteur à 60 bars et on monte la température, sans palier, à 350°C.

Résultats :
A = 1,35
I = 0,8

EXEMPLE 3 : (selon l'invention)

On procéde comme à l'exemple 2 en deux étapes, mais on utilise ici pour la présulfuration du catalyseur un agent obtenu de la manière suivante :

Dans un réacteur de 1 litre, muni d'un agitateur, on introduit 270 g de monochlorure de soufre $S_2Cl_2$ (2 moles), puis, par l'intermédiaire d'un tube plongeant, on introduit sous la surface du $S_2Cl_2$ constamment agité, 245,5 g d'isobutylène (4,383 moles), dans laquel on a préalablement dissous 57,30 g de diisobutylène (0,51 mole) et 2,5 g de méthanol. La température du milieu réactionnel est maintenue entre 45 et 50°C durant toute la durée d'introduction de l'isobutylène (1 heure). On obtient ainsi 500 g de produit d'addition que l'on désigne par le terme d'"adduct".

Dans un second réacteur de 1 litre muni d'un agitateur et surmonté d'un système permettant la distillation, on introduit 98 g de soude en pastilles (2,45 moles) et 400 cm³ de méthanol anhydre, puis on agite le mélange jusqu'à dissolution complète.

Par l'intermédiaire d'une ampoule à brome, on ajoute dans la solution alcaline 110,25 g de tert-butyl mercaptan (1,225 mole) pendant une période de 1 heure, le mélange réactionnel étant maintenu vers 50°C par refroidissement extérieur.

On ajoute ensuite dans le milieu 152 g de soufre en fleur (4,75 at-g), puis on chauffe le mélange sous agitation à la température de reflux du méthanol pendant 1 heure pour favoriser la formation du mercaptate-polysulfure de sodium.

Par l'intermédiaire d'une ampoule à brome, on introduit dans la solution alcaline de mercaptate-polysulfure de sodium 150 g d'"adduct" précédemment préparé (Cl = 26,3 % en masse; durée d'introduction : 4 heures), la température réactionnelle étant régulée par le reflux du méthanol à ébullition.

On laisse réagir au reflux pendant 7 heures, puis on élimine progressivement le méthanol par distillation, alors que, parallèlement, on introduit progressivement 350 cm³ d'eau dans le mélange en ébullition.

Après distillation complète du méthanol, on sépare la phase organique chaude de la phase aqueuse contenant le NaCl formé et l'excès de mercaptate-polysulfure de sodium.

Après décantation, la phase organique récupérée est lavée deux fois avec 200 cm³ d'eau, séchée sur $Na_2SO_4$ anhydre puis filtrée. On recueille ainsi 228,8 g d'un liquide jaune orangé dont les caractéristiques sont :
- soufre contenu par l'additif (% masse) : 62,5
- chlore résiduel dans l'additif (% masse): 0,0120 (120 ppm) (dosage par fluorescence X)
- viscosité cinématique à 100°C (mm2/s) : 13,4

A l'issue de la première étape, conforme au procédé selon l'invention, conduite dans les conditions opératoires de l'exemple 2, le catalyseur imprégné du composé sulfuré est soumis à la deuxième étape conformément à la deuxième étape de l'exemple 2. A l'issue du traitement pendant 2 heures à 150°C, on refroidit le catalyseur sous azote jusqu'à température ambiante. L'analyse du catalyseur donne 8,5 % poids de soufre et 2 % poids de carbone environ.

Le test d'hydroraffinage est effectué de la même manière qu'aux exemples 1 et 2 et on obtient les résultats suivants :
A = 1,50
I = 1,10

EXEMPLE 4

On réalise une présulfuration d'un catalyseur en procédant comme l'exemple 3. Le catalyseur est toujours celui utilisé dans les exemples précédents. On le met en oeuvre dans un réacteur de CATATEST, et on procède à un test d'HDS et d'hydrodésazotation d'un gazole de cokéfaction : le catalyseur une fois chargé, le réacteur est purgé d'air, puis mis en balayage d'$H_2$ à froid, la pression est portée à 100 bars. On chauffe. On injecte la charge de gazole lorsque le catalyseur a atteint 150°C. On monte jusqu'à 300°C et on reste 15 mm en palier à cette température, puis on maintient la température de réaction (300°C) et on procède à ce test très représentatif de conditions industrielles d'utilisation du catalyseur.

Les conditions de test dont indiquées au tableau 2. Les caractéristiques de la charge de gazole de cokéfaction au tableau 1.

Les performances en HDS et HDN stabilisées après 60 heures puis 120 heures de fonctionnement en continu, sont comparées aux performances obtenues dans les mêmes conditions, sur le même catalyseur, mais sulfuré in-situ de la manière décrite aux exemples 1 et 2.

La technique de présulfuration ex-situ selon l'invention donne un résultat sensiblement meilleur que les autres techniques.

Les exemples 3 et 4 montrent que le procédé selon l'invention apporte les avantages cités plus haut, un gain sensible sur le plan de performances catalytiques par rapport aux techniques d'activation des catalyseurs de raffinage selon l'art antérieur (voir tableau 3).

Tableau 1

| Charge | Gazole de Cokéfaction |
|---|---|
| Densité à 20°C (g/cm$_3$) | 0.857 |
| Soufre (%pds) | 0.45 |
| Azote (ppm pds) | 420 |
| Poids moléculaire moyen (g) | 205 |
| Indice de Brome (g % g) | 17 |
| Point de trouble (°C) | -9 |
| Indice de Cétane | 40 |
| Distillation | NF M07-002 |
| PI (°C) | 161 |
| 5 % " | 194 |
| 10 % " | 203 |
| 50 % " | 256 |
| 90 % " | 328 |
| 95 % " | 338 |
| PF % " | 350 |

Caractéristiques de la charge de test.

Tableau 2

| | Test Gazole de Cokéfaction |
|---|---|
| Palier 1 | |
| Pression totale (bars) | 100 |
| Température (°C) | 360 |
| V.V.H. | 4 |
| Rapport H$_2$/HC (N$_1$/1) | 250 |
| Durée (heures) | 60 |
| Palier 2 | |
| Pression totale (bars) | 60 |
| Température (°C) | 360 |
| V.V.H. | 2 |
| Rapport H$_2$/HC | 250 |
| Durée (heures) | 60 |
| Volume de catalyseur (CM$_3$) | 50 |
| Présulfuration par charge toluène + CC$_6$ + DMDS CC$_6$ = (cyclohexane) | |

Caractéristiques du test catalytique.

EP 0 338 897 A1

Tableau 3

| | R100 b V.V.H. = 4 après 60 h | | 60 b V.V.H. = 2 après 120 h | |
|---|---|---|---|---|
| | HDS | HDN | HDS | HDN |
| Technique de l'Ex. 1 | 96.8 | 84.9 | 97.2 | 81.2 |
| Technique de l'Ex. 2 | 95.8 | 85.9 | 97.5 | 82.9 |
| Catalyseur présulfuré selon l'invention | 97.2 | 86.5 | 97.9 | 84.0 |

**Revendications**

1. - Procédé de traitement d'un catalyseur neuf ou régénéré renfermant un support à base d'au moins un oxyde d'un métal ou d'un métalloïde et au moins un métal actif, réalisé en l'absence d'hydrogène et caractérisé en ce que l'on traite ledit catalyseur à l'aide d'au moins un agent de sulfuration utilisé en solution dans un solvant, ledit agent consistent en un produit qui est obtenu au terme d'un procédé en deux étapes qui consiste :

(à) à faire réagir au moins un composé choisi parmi les chlorures de soufre avec au moins une oléfine ou un mélange d'oléfines comportant 2 à 12 atomes de carbone par molécule, en vue de former un produit d'addition (ou "adduct"),

(b) à faire réagir ledit "adduct" avec au moins un mercaptate ou un mercaptate-polysulfure alcalin dans un milieu aqueux et/ou alcoolique en vue de former une oléfine polysulfure pouvant contenir jusqu'à 65 % en masse de soufre, lesdits mercaptates et mercaptates-polysulfures répondant respectivement aux formules générales R'SM et R'S$_x$M dans lesquelles R' représente un radical aliphatique, renfermant de 1 à 14 atomes de carbone, ce radical aliphatique pouvant comporter au moins un groupement fonctionnel (par exemple au moins un groupe hydroxyle), un radical aromatique, éventuellement substitué par un ou plusieurs radicaux aliphatiques et renfermant de 6 à 14 atomes de carbone ou un radicalhétérocyclique renfermant au moins un hétéroatome choisi parmi l'azote, le soufre et l'oxygène, M représentant un atome ou un groupement monovalent correspondant à une base minérale de formule générale MOH, et x prenant une valeur moyenne d'au moins 1 et pouvant aller jusqu'à environ 7.

2. - Procédé selon la revendication 1 de traitement d'un catalyseur neuf ou régénéré, renfermant un support à base d'au moins un oxyde d'un métal ou d'un métalloïde et au moins un métal actif, en vue d'effectuer ultérieurement, en présence d'hydrogène, la sulfuration totale ou partielle, c'est-à-dire, en quan tités stoechiométriques ou non, du ou des métaux dits actifs entrant dans la composition du catalyseur, le procédé étant caractérisé en ce que le catalyseur, neuf ou régénéré, est traité "ex-situ" à l'aide d'au moins ledit agent de sulfuration que l'on introduit entre 0 et 50°C en quantités requises dans la porosité du catalyseur.

3. - Procédé selon l'une des revendications 1 et 2 de sulfuration partielle ou totale d'un métal actif ou d'au moins un des métaux actifs entrant dans la composition d'un catalyseur renfermant (a) un support à base d'au moins un oxyde d'un métal ou d'un métalloïde et (b) au moins un métal dit actif, le procédé de sulfuration étant caractérisé en ce que dans une première étape réalisée "ex-situ" et en l'absence d'hydrogène, on traite le catalyseur à l'aide d'au moins un agent de sulfuration de façon à incorporer partiellement ou totalement cet agent dans la porosité du catalyseur, l'agent de sulfuration étant en solution dans un solvant, et en ce que dans une deuxième étape, réalisée "in-situ", qui est l'étape d'activation du catalyseur effectuée en présence d'hydrogène, on traite le catalyseur obtenu en première étape par de l'hydrogène pour fixer la quantité requise de soufre sur le ou les métaux entrant dans le composition dudit catalyseur.

4. - Procédé selon l'une des revendications de 1 à 3, dans lequel l'agent de sulfuration contient entre 20 et 70 % en masse de soufre.

5. - Procédé selon l'une des revendications 1 à 4, dans lequel ledit solvant dans lequel est dissous l'agent de sulfuration est choisi dans au moins un des solvants du groupe constitué par une essence légère bouillant entre environ 60 et 95°C, une essence de type hexane bouillant entre environ 63 et 68°C, une essence dite de type F bouillant entre environ 100 et 160°C (et renfermant 10 à 20 %, en volume, d'hydrocarbures aromatiques) et une essence du type "white spirit" bouillant entre environ 150 et 250°C (et renfermant environ 14 à 22 %, en volume, d'hydrocarbures aromatiques).

6. - Procédé selon l'une des revendications 1 à 5 %, caractérisé en ce que l'on opère en présence de 0,4 à 8 % en poids par rapport au poids de polysulfure d'au moins un additif choisi dans le groupe

12

constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

7. - Procédé selon l'une des revendications 1 à 6 lequel l'agent de sulfuration est à base d'une composition d'oléfine polysulfurée à teneur élevée en soufre et à très faible teneur en chlore, obtenue par un procédé en 5 points dans lequel :

(1) on fait réagir au moins composé choisi parmi le monochlorure et le dichlorure de soufre avec au moins monooléfine aliphatique de 2 à 12 atomes de carbone pour former un produit d'addition ou "adduct" ;

(2) en vue de préparer un mercaptate ou un mercaptate-polysulfure, on fait réagir un mercaptan avec de l'hydroxyde de sodium, de potassium ou d'ammonium en solution et éventuellement du soufre dans au moins un monoalcool aliphatique substantiellement anhydre comportant de 1 à 4 atomes de carbone par molécule ;

(3) on met en contact ledit "adduct" formé au point (1) avec la solution alcoolique obtenue à l'issue du point (2) ;

(4) on chauffe le mélange résultant du point (3), on élimine ledit monoalcool tout en ajoutant de l'eau en une quantité suffisante pour maintenir en solution les réactifs et les produits minéraux ;

(5) après décantation et élimination de la phase aqueuse, on récupère la phase organique constituée au moins en majeur partie par la composition d'oléfine polysulfurée recherchée.

8. - Procédé selon la revendication 7 dans lequel au point (1), on utilise de 1,5 à 2,5 mole de monooléfine aliphatique par mole de mono et/ou de dichlorure de soufre et on opère à une température de 20 à 80°C et au point (2), on utilise de 100 à 400 cm$_3$ de monoalcool aliphatique et de 0,1 à 1 mole de mercaptan par mole d'hydroxyde et on ajoute lorsqu'on désire obtenir un mercaptate-polysulfure, du soufre élémentaire au mélange de réaction, la proportion de soufre élémentaire introduite allant jusqu'à environ 3,6 atomes-gramme par mole d'hydroxyde introduite.

9. - Procédé selon la revendication 8 dans lequel on opère en présence d'au moins une monooléfine aliphatique choisie dans le groupe constitué par un butène, un hexène, du dipropylène, un heptène, un octène, du diisobutylène, un nonène, du tripropylène, un décène, un undécène, un dodécène, du tétrapropylène ou du tri-isobutylène, les mélanges de deux ou plusieurs monooléfines et les coupes oléfiniques obtenues par dimérisation du propylène, ladite monooléfine (ou le mélange de monooléfines) étant utilisée à raison de 1,5 à 2,5 moles par mole de mono ou dichlorure de soufre, ledit mono ou dichlorure de soufre liquide étant généralement introduit dans l'oléfine ou le mélange d'oléfines à 20-80°C, le produit d'addition, ou "adduct", obtenu à l'issue du point (1) consistant en un mélange de composés sulfurés dans lequel la proportion moyenne de soufre est d'environ 1 à 2 atomes-gramme par mole, la proportion de chlore étant d'environ 1 à 2 atomes-gramme par mole de produit, procédé dans lequel en outre dans le point (3) où l'on fait réagir le mercaptate ou le mercaptate-polysulfure de formule R'S$_x$M, au sein d'un mono alcool aliphatique, avec de l' "adduct" obtenu à l'issue de l'étape (1), ledit "adduct" est ajouté à la solution alcoolique dudit mercaptate ou mercaptate-polysulfure en une proportion telle que ledit mercaptate ou mercaptate-polysulfure représente un excès molaire d'environ 0,1 à 70 % par rapport à la stochiométrie de 1 mole par atome-gramme de chlorure contenue par ledit "adduct", le milieu réactionnel étant maintenu à une température allant de -10° C à la température de reflux du solvant alcoolique mis en jeu.

10. - Procédé selon l'une des revendications 1 à 9 pour le traitement d'un catalyseur neuf ou régénéré renfermant un support à base d'au moins un oxyde d'un métal ou d'un métalloïde et au moins un métal actif, réalisé en l'absence d'hydrogène et caractérisé en ce que l'on traite ledit catalyseur à l'aide d'au moins un agent de sulfuration utilisé en solution dans un solvant, ledit agent étant un polysulfure de formule générale : R'-S$_y$-R-S$_x$-R-S$_y$-R'
où R est un radical organique linéaire ou ramifié comportant 2 à 12 atomes de carbone, R' est un radical alkyle, alkényle, arylalkyle ou arylalkényle comportant 1 à 12 atomes de carbone, x possède la valeur 1 à 4, y possède la valeur 1 à 8.

13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 725 571  (W.J. TUSZYNSKI)<br>--- | | B 01 J  37/20<br>C 10 G  47/26<br>C 10 G  49/12 |
| A | US-A-4 725 569  (W.J. TUSZYNSKI)<br>--- | | |
| D,A | EP-A-0 181 254  (EURECAT)<br>--- | | |
| A | US-A-4 048 058  (R.D. PETERSEN)<br>----- | | |

DOMAINES TECHNIQUES
RECHERCHES (Int. Cl.4)

B 01 J
C 10 G

Le présent rapport a été établi pour toutes les revendications

| Lieu de la recherche | Date d'achèvement de la recherche | Examinateur |
|---|---|---|
| LA HAYE | 07-06-1989 | THION M.A. |

EPO FORM 1503 03.82 (P0402)